(19) Europäisches Patentamt | European Patent Office | Office européen des brevets

(11) **EP 3 889 639 B1**

(12) **EUROPEAN PATENT SPECIFICATION**

(45) Date of publication and mention
of the grant of the patent:
**25.06.2025  Bulletin 2025/26**

(21) Application number: **19889042.8**

(22) Date of filing: **18.11.2019**

(51) International Patent Classification (IPC):
*G01S 7/481* (2006.01)          *G01S 17/931* (2020.01)
*G01S 17/42* (2006.01)          *G02B 26/08* (2006.01)
*G02B 26/10* (2006.01)

(52) Cooperative Patent Classification (CPC):
**G02B 26/105; G01S 7/4817; G01S 17/42;**
**G01S 17/931; G02B 26/0816**

(86) International application number:
**PCT/JP2019/045094**

(87) International publication number:
**WO 2020/110801 (04.06.2020 Gazette 2020/23)**

(54) **RANGING SENSOR, VEHICLE LAMP, AND RANGING METHOD**

ENTFERNUNGSMESSUNGSSENSOR, FAHRZEUGLEUCHTE UND
ENTFERNUNGSMESSVERFAHREN

CAPTEUR DE TÉLÉMÉTRIE, FEU DE VÉHICULE ET PROCÉDÉ DE TÉLÉMÉTRIE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **30.11.2018   JP 2018225761**

(43) Date of publication of application:
**06.10.2021   Bulletin 2021/40**

(73) Proprietor: **KOITO MANUFACTURING CO., LTD.**
**Minato-ku**
**Tokyo 108-8711 (JP)**

(72) Inventor: **NAGASHIMA, Toru**
**Shizuoka-shi Shizuoka 424-8764 (JP)**

(74) Representative: **Algemeen Octrooi- en**
**Merkenbureau B.V.**
**P.O. Box 645**
**5600 AP Eindhoven (NL)**

(56) References cited:
EP-A1- 2 746 809          WO-A1-2019/064750
JP-A- 2012 132 917          JP-A- 2014 119 414
JP-A- H10 151 987          JP-A- H10 151 987
US-A1- 2013 003 041          US-A1- 2013 301 030
US-A1- 2017 307 736          US-A1- 2018 045 826
US-A1- 2018 052 225

## Description

[TECHNICAL FIELD]

The present invention relates to a distance measurement technique.

[BACKGROUND ART]

Candidates of vehicle sensors include Light Detection and Ranging, Laser Imaging Detection and Ranging (LiDAR), cameras, millimeter-wave radar, ultrasonic sonar, and so forth. In particular, LiDAR has advantages as compared with other sensors. Examples of such advantages include: (i) an advantage of being capable of recognizing an object based on point cloud data; (ii) an advantage in employing active sensing, which is capable of providing high-precision detection even in bad weather conditions; (iii) an advantage of providing wide-range measurement; etc. Accordingly, LiDAR is anticipated to become mainstream in vehicle sensing systems.

[Related Art Documents]

[Patent Documents]

[Patent document 1]
Japanese Patent Application Laid Open No. 2017-56935
[Patent document 2]
Japanese Patent Application Laid Open No. 2009-98023
[Patent document 3]
US2013/301030A1 discloses a laser scanner detects and determines distances of objects comprises a light transmitter, a rotatable deflection unit, an angular measurement unit and an evaluation unit that determines the distance of the object by means of a light propagation method in overlapping time intervals.
[Patent document 4]
EP2746809A1 discloses a distance measurement method in which a control unit switches between a first mode and a second mode based on a comparison result between a distance to an object and a threshold value.
[Patent document 5]
US2018/052225A1 discloses a method of operating a scanner, wherein an angular resolution of the scanner can be changed.
[Patent document 6]
JPH10151987A discloses an inter-vehicle distance detecting part which detects an inter-vehicle distance from another vehicle such as a vehicle running in the opposite direction from a propagational duration.

[DISCLOSURE OF THE INVENTION]

[PROBLEM TO BE SOLVED BY THE INVENTION]

Currently, commercially available LiDARs have a problem of an extremely high cost. Accordingly, in some cases, it is difficult to employ such a high-cost LiDAR depending on the kind of automobile or the usage thereof.
The present invention has been made in view of such a situation. Accordingly, it is an exemplary purpose of an embodiment of the present invention to provide a distance measurement sensor with a reduced cost while suppressing degradation in object detection precision.

[MEANS TO SOLVE THE PROBLEM]

An embodiment of the present invention relates to a distance measurement sensor. The distance measurement sensor includes: a light source; a scanning device including a motor and a mirror attached to the motor and structured to reflect emitted light of the light source, in which the scanning device is structured such that scan probe light, which is light reflected by the mirror, can be scanned according to the rotation of the motor; a photosensor structured to detect during a scan period return light, which is the probe light reflected by an object; and a processor structured to detect the distance to a point on the object based on the output of the photosensor. The angular resolution in the scan direction is changed dynamically according to the distance to the point on the object during the scan period.

[ADVANTAGE OF THE PRESENT INVENTION]

With the present invention, a measurement sensor can be provided with a reduced cost while suppressing degradation in object detection precision.

[BRIEF DESCRIPTION OF THE DRAWINGS]

Fig. 1 is a block diagram showing a distance measurement sensor according to an embodiment;
Fig. 2 is a diagram showing point cloud data acquired with a constant angular resolution $\Delta\theta$;
Fig. 3 is a diagram showing point cloud data acquired with a variable angular resolution $\Delta\theta$;
Figs. 4A and 4B are diagrams each showing a relation between the distance d to an object and the angular resolution $\Delta\theta$;
Fig. 5 is a diagram showing a relation between the distance measurement range and the angular resolution $\Delta\theta$;
Fig. 6 is a diagram showing an example of the control of the angular resolution $\Delta\theta$;
Fig. 7 is a block diagram showing the distance measurement sensor according to an example 1;

Fig. 8 is a time chart showing the control of the angular resolution $\Delta\theta$ according to the example 1;

Fig. 9 is a time chart showing the control of the angular resolution $\Delta\theta$ according to an example 2;

Fig. 10 is a block diagram showing an automobile provided with the distance measurement sensor;

Fig. 11 is a block diagram showing an automotive lamp provided with the distance measurement sensor.

[BEST MODE FOR CARRYING OUT THE INVENTION]

OVERVIEW OF THE EMBODIMENTS

An embodiment disclosed in the present specification relates to a distance measurement sensor. The distance measurement sensor includes a light source, a scanning device, a photosensor, and a processor. The scanning device includes a motor and a mirror attached to the motor and structured to reflect emitted light of the light source. The scanning device is structured such that scan probe light, which is light reflected by the mirror, can be scanned according to the rotation of the motor. The photosensor detects during a scan period return light that is the probe light reflected from a point on an object. The angular resolution in the scan direction is dynamically changed according to the distance tc the point on the object during the scan period.

With this embodiment, the resolution in the scan direction (e.g., horizontal direction) is dynamically changed according to the distance to the object. This allows the shape of an object located at a farther position to be detected with high precision.

Also, the rotational speed of the motor may be changed according to the distance to the object. Instead of or in addition to such an arrangement, the distance measurement period may be changed according to the distance to the object.

Another embodiment of the present invention relates to an automotive lamp. The automotive lamp includes: any one from among the above-described distance measurement sensors; a variable light distribution lamp; and a controller structured to control the variable light distribution lamp according to the output of the distance measurement sensor.

EMBODIMENTS

Description will be made below regarding the present invention based on preferred embodiments with reference to the drawings. The same or similar components, members, and processes are denoted by the same reference numerals, and redundant description thereof will be omitted as appropriate. The embodiments have been described for exemplary purposes only, and are by no means intended to restrict the present invention. Also, it is not necessarily essential for the present invention that all the features or a combination thereof be provided as described in the embodiments.

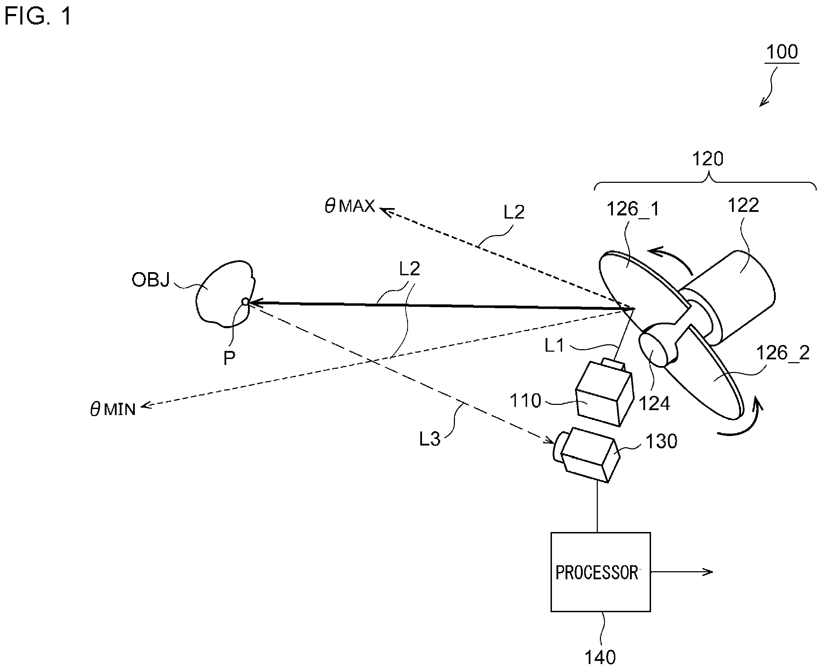

Fig. 1 is a block diagram showing a distance measurement sensor 100 according to an embodiment. The distance measurement sensor 100 is configured as a LiDAR (Light Detection and Ranging), including a light source 110, a scanning device 120, a photosensor 130, and a processor 140. The light source 110 emits light L1 having an infrared spectrum, for example. The emitted light L1 of the light source 110 may be modulated with respect to time.

The scanning device 120 includes a motor 122 and one or multiple mirrors (which will be also referred to as "blades") 126. The mirrors 126 are configured to have a fan-shaped structure. The mirrors 126 are attached to a rotational shaft 124 of the motor 122 such that they reflect the emitted light L1 of the light source 110. The emission angle (which will also be referred to as a "scan angle") $\theta$ of probe light L2, which is light reflected from the mirrors 126, changes according to the position of the mirrors 126 (i.e., rotational angle $\phi$ of the motor). Accordingly, by rotationally driving the motor 122, the probe light L2 can be scanned in the $\theta$ direction ranging between $\theta_{MIN}$ and $\theta_{MAX}$. It should be noted that, in a case in which the number of mirrors 126 thus provided is two, one half-rotation of the motor 122 (mechanical angle of 180 degrees) corresponds to a single scan. Accordingly, the probe light L2 is scanned twice every time the motor 122 is rotated once. It should be noted that the number of the mirrors 126 is not restricted in particular.

The rotational angle $\phi$ of the motor 122 can be detected by means of a position detection mechanism such as a Hall sensor, optical encoder, or the like. Accordingly, the scan angle $\theta$ at each time point can be obtained based on the rotational angle $\phi$.

The photosensor 130 detects return light L3 reflected at a point P on an object OBJ. The processor 140 detects the distance to the point P on the object OBJ based on the output of the photosensor 130. The distance detection method or algorithm is not restricted in particular. Rather, known techniques may be employed. For example, the delay time from the emission of the probe light L2 to the reception of the return light by means of the photosensor 130, i.e., the time of flight (TOF), may be measured so as to acquire the distance.

The above is the basic configuration of the distance measurement sensor 100. Next, description will be made regarding the operation thereof. The motor 122 is rotationally driven so as to change the scan angle $\theta$ of the probe light L2 in the order of $\theta_1$, $\theta_2$, .... In this operation, the distance $r_i$ to the point $P_i$ on the surface of the object OBJ is measured at each scan angle $\theta_i$ ($i = 1, 2, ...$). With this, data (point cloud data) formed of data pairs each configured as a pair of the scan angle $\theta_i$ and the corresponding distance $r_i$, can be acquired.

With such a distance measurement sensor 100, the scanning device 120 can be configured as a combination of the motor 122 configured as a commonplace motor and the mirrors 126 arranged in a fan structure.

This provides the distance measurement sensor 100 with a reduced cost.

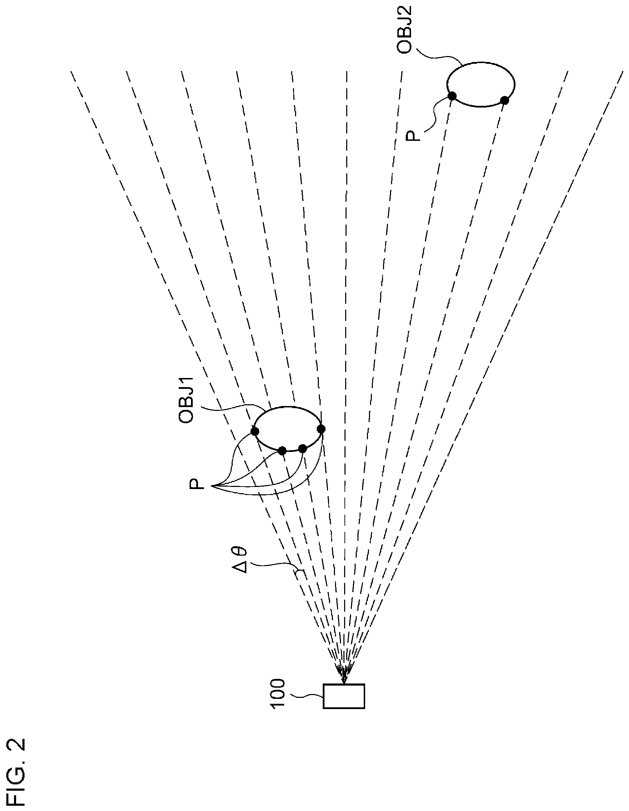

Next, description will be made regarding other features of the distance measurement sensor 100. Fig. 2 is a diagram showing the point cloud data acquired in measurement with a constant angular resolution $\Delta\theta$. An object OBJ1 is located at a position that is relatively nearer to the distance measurement sensor 100. In contrast, an object OBJ2 is located at a position that is relatively farther from the distance measurement sensor 100.

In a case of measurement with a constant angular resolution $\Delta\theta$, reflected light data is acquired for a relatively larger number of points P1 with respect to the object OBJ1 at a position nearer to the distance measurement sensor 100. However, as the distance to the object becomes larger, the number of the points P for which the reflected light data is acquired becomes smaller. That is to say, as the distance to the object becomes larger, the difficulty of judging its shape becomes higher.

In order to solve such a problem, an approach can be employed in which the angular resolution $\Delta\theta$ is designed to be very fine so as to provide sufficient resolution for an object at the farthest position within the distance measurement range of the distance measurement sensor 100. However, such an approach involves an enormous number of points of point cloud data acquired in a single scan. This requires the processor 140 to support an enormous amount of calculation, leading to reduction of the scanning rate. In order to provide the scanning rate required by an application, such an arrangement requires the processor 140 to be configured as a high-cost, high-performance processor. This does not meet a demand for the distance measurement sensor 100 to be provided with a low cost.

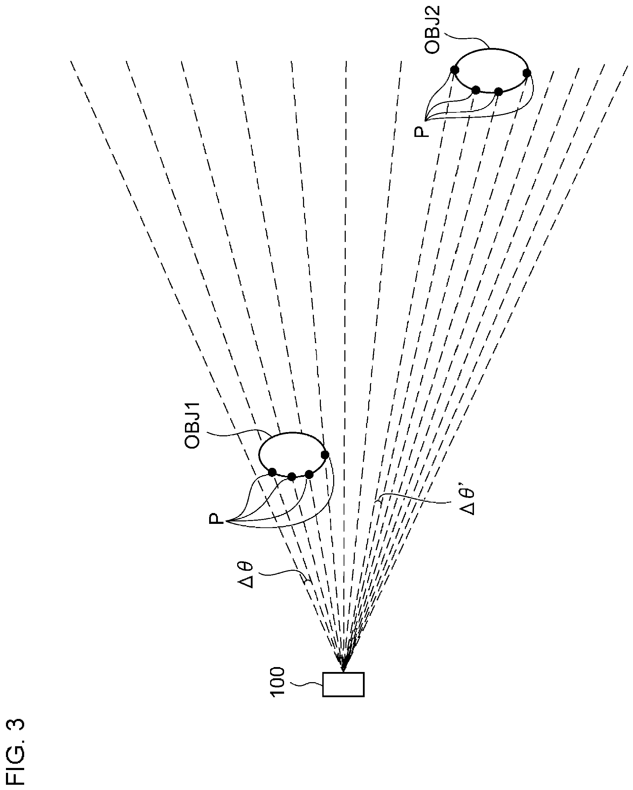

In order to solve such a problem, with the present embodiment, the angular resolution $\Delta\theta$ is designed to be dynamically changed according to the distance d to the object OBJ. Fig. 3 is a diagram showing the point cloud data acquired with a variable angular resolution $\Delta\theta$. When the object OBJ2 to be measured is located at a farther position, the angular resolution $\Delta\theta$ is adjusted to a higher resolution. With this, reflected light data is acquired for four points with respect to the object OBJ2 at a farther position. This allows the shape judgement to be made even for the object OBJ2 located at a farther position.

From another viewpoint, when the object OBJ1 is located at a nearer position, the angular resolution $\Delta\theta$ is adjusted to a lower resolution so as to reduce the number of points of point cloud data. This allows the scanning rate required for an application to be supported even in a case of employing a low-cost, relatively low-performance processor as the processor 140.

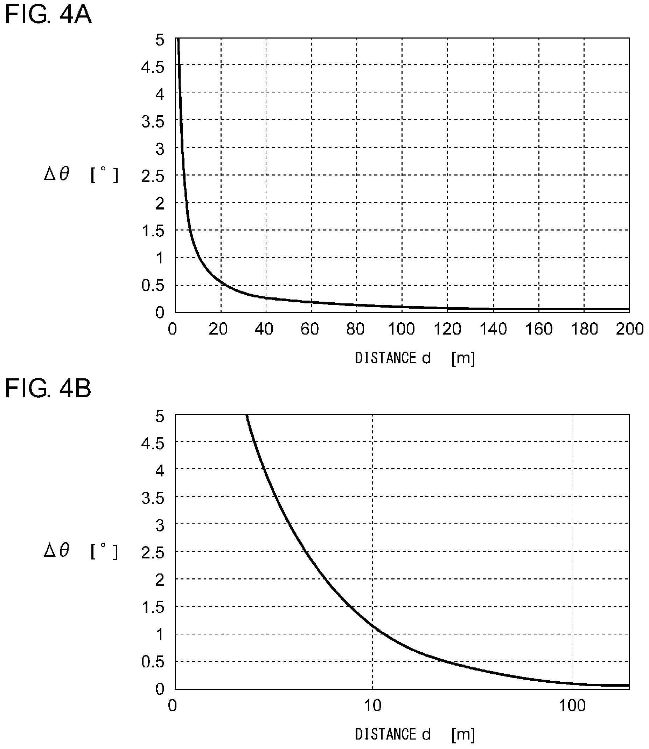

Figs. 4A and 4B are diagrams each showing the relation between the distance d to the object and the angular resolution $\Delta\theta$. For example, let us consider an example in which a spatial resolution of $\Delta x$ is designed in

the scan direction regardless of the distance d to the object. In this case, it is sufficient if the following Expression (1) is satisfied. Accordingly, the relation expression between $\Delta\theta$ and d is represented by Expression (2).

$$\text{d} \bullet \sin(\Delta\theta) = \Delta x \ \ldots(1)$$

$$\Delta\theta = \arcsin(\Delta x / \text{d}) \ \ldots(2)$$

Figs. 4A and 4B are diagrams each showing the relation between $\Delta\theta$ and d with $\Delta x$ as 0.2 m. Specifically, Fig. 4 shows the relation with the horizontal axis as a linear scale. Fig. 4B shows the relation with the horizontal axis as a logarithmic scale.

The angular resolution $\Delta\theta$ may be held in the form of a function of the distance d, and the angular resolution $\Delta\theta$ may be calculated by the processor 140. Alternatively, a table that represents the relation between the distance d and the angular resolution $\Delta\theta$ may be held, and the angular resolution $\Delta\theta$ may be acquired by referring to the table.

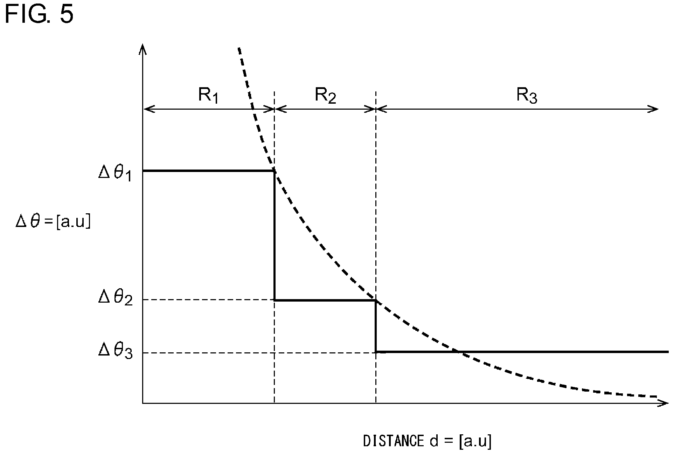

Instead of such an example as shown in Figs. 4A and 4B in which the angular resolution $\Delta\theta$ is continuously changed according to the distance d to the object OBJ, the angular resolution $\Delta\theta$ may be changed in a discrete manner as described below. That is to say, the overall distance measurement range is divided into m multiple ranges $R_1$ through $R_m$, and the angular resolutions $\Delta\theta_1$ through $\Delta\theta_m$ may be determined for each range. Fig. 5 is a diagram showing the relation between the distance measurement range and the angular resolution $\Delta\theta$. Fig. 5 shows an example in which m = 3. However, the number of the divided ranges is not restricted in particular. For example, the division number m may be 2 or 4 or more.

The distance d to the object OBJ can be detected based on the distance r to a typical point P on the surface of the object OBJ. As the typical point, the point at which the reflected light data was first acquired may be selected. Alternatively, multiple points may be selected as the typical points. In this case, the average value of the distances to the multiple typical points may be employed as the distance d to the object OBJ.

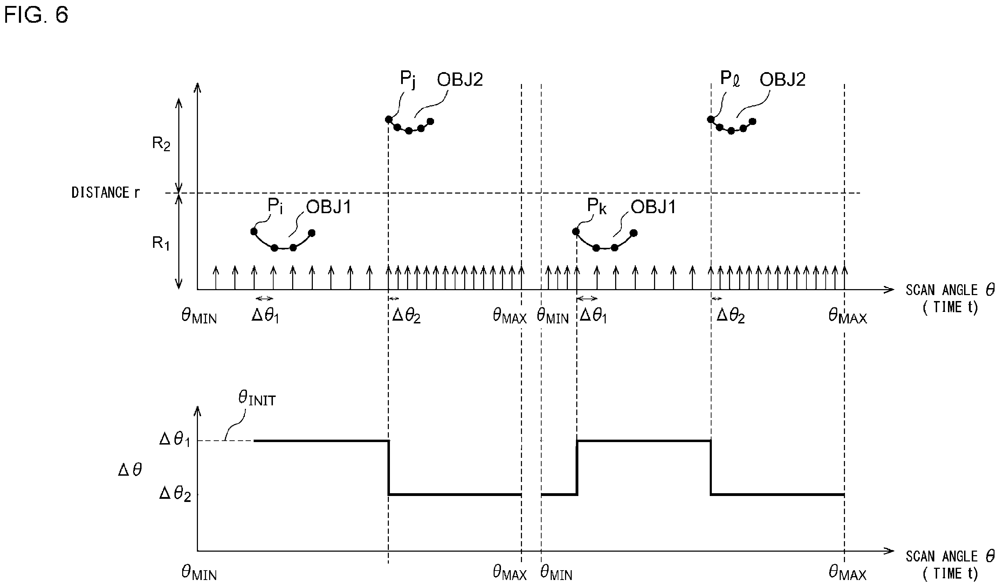

The resolution $\Delta\theta$ is dynamically changed in one scanning period. For example, the angular resolution $\Delta\theta$ may be updated every time a new object OBJ is detected. Fig. 6 is a diagram showing an example of the control of the angular resolution $\Delta\theta$. The horizontal axis represents the scan angle $\theta$, which can be associated with the direction of time progression. The upper graph shows the distance r. The lower graph shows the angular resolution $\Delta\theta$. Fig. 6 shows graphs over two scanning periods.

Let us consider a situation in which the object OBJ1 is positioned within the range $R_1$, and the object OBJ2 is positioned within the range $R_2$. Initially, the angular resolution $\Delta\theta$ is set to an initial value $\theta_0$.

The distance $r_i$ to the first point $P_i$ is measured

on the object OBJ1. In this stage, assuming that the distance $r_i$ is the same as the distance d1 to the object OBJ1, judgement is made that the object OBJ1 is positioned within the range $R_1$. Accordingly, after the angular resolution $\Delta\theta$ is set to a larger value $\Delta\theta_1$, the scanning progresses.

Subsequently, the distance $r_j$ to the first point $P_j$ is measured on the object OBJ2. In this stage, based on the distance $r_j$, i.e., assuming that the distance $r_j$ is the same as the distance d2 to the object OBJ2, judgement is made that the object OBJ2 is positioned within the range $R_2$. Accordingly, after the angular resolution $\Delta\theta$ is set to a smaller value $\Delta\theta_2$, the scanning progresses.

After the scan angle $\theta$ reaches $\theta_{MAX}$, the measurement proceeds to the next scanning period. In this stage, the angular resolution $\Delta\theta$ is returned to $\theta_{MIN}$.

The distance $r_k$ to the first point $P_k$ is measured on the object OBJ1. In this stage, assuming that the distance $r_k$ is the same as the distance d1 to the object OBJ1, judgement is made that the object OBJ1 is positioned within the range $R_1$. Accordingly, after the angular resolution $\Delta\theta$ is set to $\Delta\theta_1$, the scanning progresses.

Subsequently, the distance $r_1$ to the first point $P_1$ is measured on the object OBJ2. In this stage, based on the distance $r_1$, i.e., assuming that the distance $r_1$ is the same as the distance d2 to the object OBJ2, judgement is made that the object OBJ2 is positioned within the range $R_2$. Accordingly, after the angular resolution $\Delta\theta$ is set to $\Delta\theta_2$ the scanning progresses.

It should be noted that, when significant reflected light data cannot be acquired in a given range, the angular resolution $\Delta\theta$ may be set to a larger value. This allows the number of points of the point cloud data to be reduced, thereby allowing the calculation load of the processor 140 to be reduced.

Next, description will be made with reference to several examples regarding a method for controlling the angular resolution $\Delta\theta$.

EXAMPLE 1

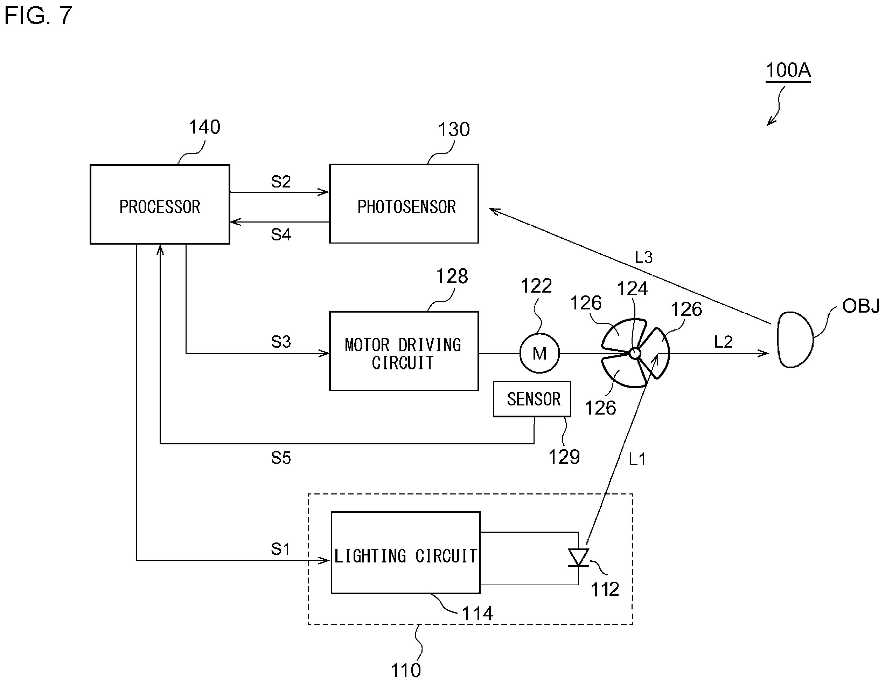

Fig. 7 is a block diagram showing a distance measurement sensor 100A according to an example 1. The distance measurement sensor 100A is configured to dynamically change the rotational speed of the motor 122 according to the distance d to the object OBJ.

The processor 140 supplies timing signals S1 and S2 to the light source 110 and the photosensor 130, respectively, in order to maintain the distance measurement period (sampling rate) Tr at a constant value.

The light source 110 includes a light-emitting element 112 and a lighting circuit 114. The lighting circuit 114 turns on the light-emitting element 112 in synchronization with the timing signal S1. The photosensor 130 measures the return light L3 in synchronization with the timing signal S2.

The processor 140 acquires the TOF based on an output S4 of the photosensor 130. The distance measurement sensor 100A may include a position sensor 129 that detects the position of a rotor of the motor 122 (rotational angle $\phi$ of the motor). The processor 140 may acquire the current scan angle $\theta$ based on an output S5 of the position sensor 129.

The processor 140 determines the angular resolution $\Delta\theta$ based on the distance d to the object OBJ. Subsequently, the processor 140 outputs a rotational speed command S3 that corresponds to the angular resolution $\Delta\theta$ to a motor driving circuit 128. The motor driving circuit 128 rotationally drives the motor 122 with a rotational speed that corresponds to the rotational speed command S3.

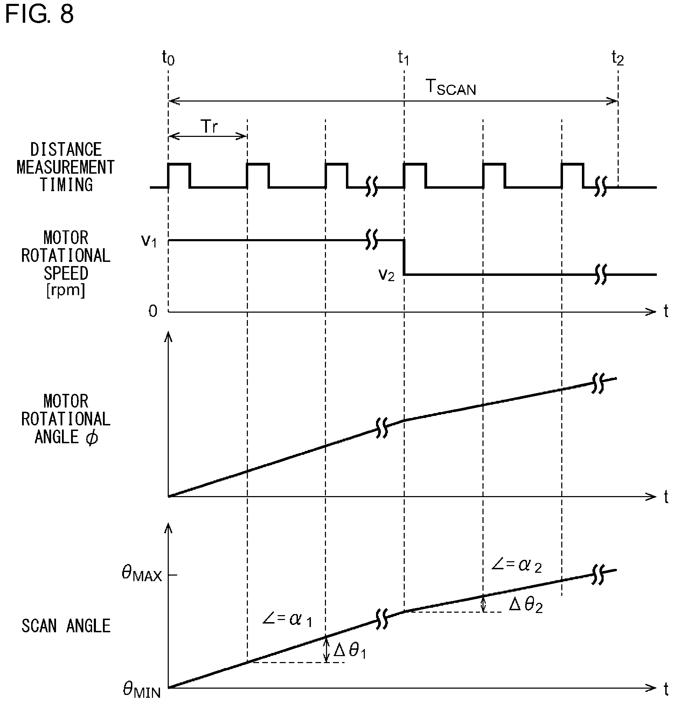

The above is the configuration of the distance measurement sensor 100A. Next, description will be made regarding the operation thereof. Fig. 8 is a time chart showing a control operation for controlling the angular resolution $\Delta\theta$ according to the example 1. A distance measurement timing occurs for every predetermined period Tr. During a period from $t_0$ to $t_1$, the motor rotational speed is set to a first value $v_1$. In this period, the rotational angle $\phi$ is changed with a first slope. For simplification of description, assuming that the scan angle changes in proportion to the motor rotational angle $\phi$, the scan angle $\theta$ is increased with a given slope $\alpha_1$. In this case, the angular resolution $\Delta\theta_1$ is represented by $\alpha_1 \times$ Tr.

During the period from $t_1$ to $t_2$, the rotational speed of the motor is set to a second value $v_2$ that is smaller than the first value $v_1$. In this period, the motor rotational angle $\phi$ is changed with a second slope. In this case, the scan angle $\theta$ is increased with a relatively small slope $\alpha_2$ ($< \alpha_1$). The corresponding angular resolution $\Delta\theta_2$ is represented by $\alpha_2 \times$ Tr.

As described above, with the example 1, by controlling the motor rotational speed, the angular resolution $\Delta\theta$ can be controlled.

It should be noted that a stepping motor is employed as the motor 122. In this case, the processor 140 is able to control the rotational speed according to the frequency of pulses supplied to the motor 122. Specifically, this arrangement allows the rotational angle to be controlled according to the number of pulses thus supplied. With such an arrangement employing such a stepping motor, an open-loop control operation can be supported, thereby allowing the position sensor 129 to be omitted.

EXAMPLE 2

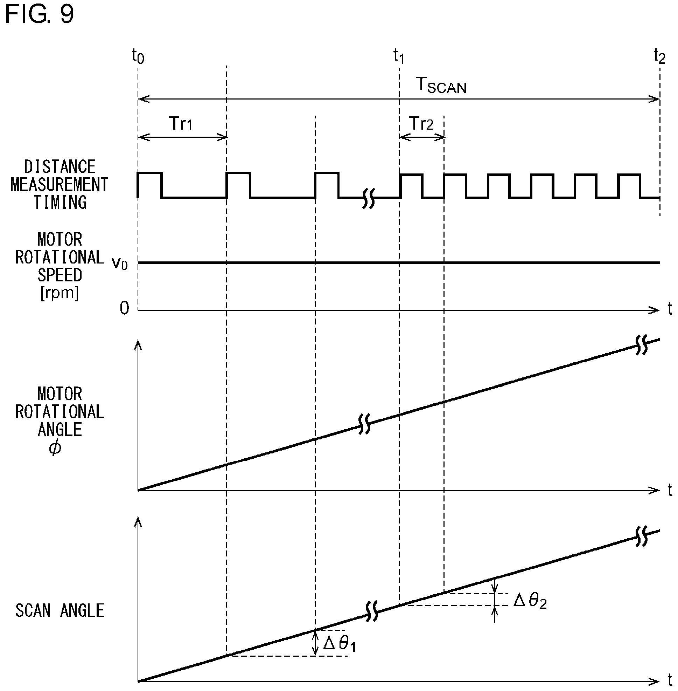

In an example 2, the distance measurement sensor 100 is configured to change the distance measurement period Tr while maintaining the motor rotational speed at a constant value. Fig. 9 is a time chart with respect to the control operation for controlling the angular resolution $\Delta\theta$ according to the example 2.

The motor rotational speed is maintained at a constant value $v_0$ over the entire scanning period $T_{SCAN}$.

Accordingly, the scan angle θ is increased with a constant slope $\alpha_0$.

During a period from $t_0$ to $t_1$, the distance measurement period Tr is set to a relatively long period, i.e., a first value $Tr_1$. In this period, the angular resolution $\Delta\theta_1$ is represented by $\alpha_0 \times Tr_1$.

During a period from $t_1$ to $t_2$, the distance measurement period Tr is set to a relatively short period, i.e., a second value $Tr_2$. In this period, the angular resolution $\Delta\theta_2$ is represented by $\alpha_0 \times Tr_2$.

As described above, by changing the distance measurement period Tr, the angular resolution $\Delta\theta$ can be controlled.

EXAMPLE 3

An example 3 is configured as a combination of the examples 1 and 2. Specifically, both the motor rotational speed and the distance measurement period Tr are changed. This allows the angular resolution $\Delta\theta$ to be adjusted.

USAGE

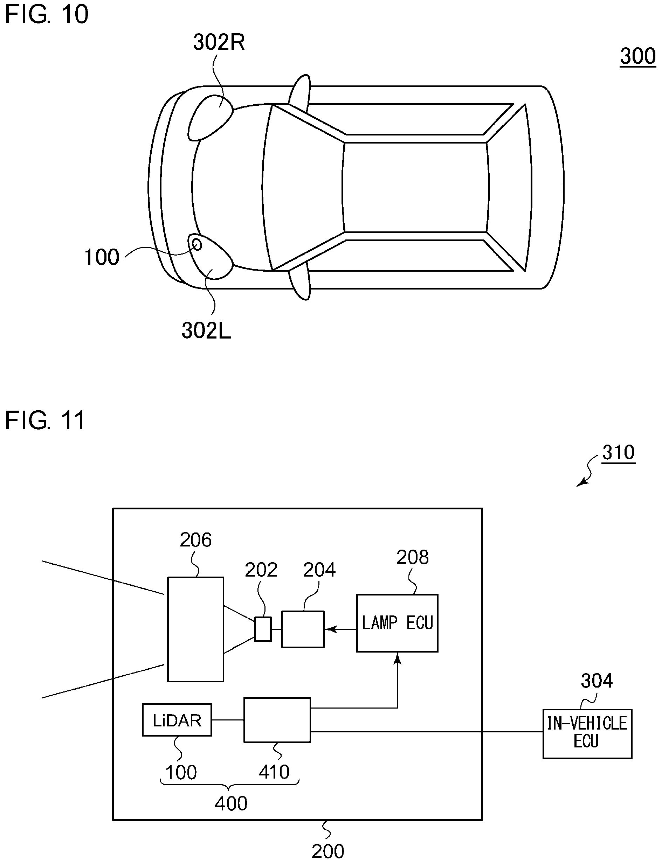

Fig. 10 is a block diagram showing an automobile provided with the distance measurement sensor 100. An automobile 300 is provided with headlamps 302L and 302R. At least one from among the headlamps 302L and 302R is provided with the distance measurement sensor 100 as a built-in component. Each headlamp 302 is positioned at a frontmost end of the vehicle body, which is most advantageous as a position where the distance measurement sensor 100 is to be installed for detecting an object in the vicinity.

Fig. 11 is a block diagram showing an automotive lamp 200 including the distance measurement sensor 100. The automotive lamp 200 forms a lamp system 310 together with an in-vehicle ECU 304. The automotive lamp 200 includes a light source 202, a lighting circuit 204, and an optical system 206. Furthermore, the automotive lamp 200 is provided with an object detection system 400. The object detection system 400 includes the above-described distance measurement sensor 100 and a processing device 410. The processing device 410 judges the presence or absence and the kind of an object OBJ in front of the vehicle based on point cloud data acquired by the distance measurement sensor 100. The processing device 410 may include an identifying device that operates based on a trained model acquired by machine learning.

Also, the information with respect to the object OBJ detected by the processing device 410 may be used to support the light distribution control operation of the automotive lamp 200. Specifically, a lamp ECU 208 generates a suitable light distribution pattern based on the information with respect to the kind of the object OBJ and the position thereof thus generated by the processing device 410. The lighting circuit 204 and the optical system 206 operate so as to provide the light distribution pattern generated by the lamp ECU 208.

Also, the information with respect to the object OBJ detected by the processing device 410 may be transmitted to the in-vehicle ECU 304. The in-vehicle ECU may support autonomous driving based on the information thus transmitted.

Description has been made above regarding the present invention with reference to the embodiments. The above-described embodiments have been described for exemplary purposes only, and are by no means intended to be interpreted restrictively. Rather, it can be readily conceived by those skilled in this art that various modifications may be made by making various combinations of the aforementioned components or processes, which are also encompassed in the technical scope of the present invention. Description will be made below regarding such modifications.

MODIFICATION 1

Description has been made in the embodiment regarding the distance measurement sensor 100 that supports a single scan line. Also, the distance measurement sensor 100 may support multiple scan lines.

MODIFICATION 2

Description has been made in the embodiment regarding an example in which the angular resolution $\Delta\theta$ is designed such that the spatial resolution $\Delta x$ in the scan direction is maintained to be as uniform as possible regardless of the distance d to the object. However, the present invention is not restricted to such an example. Also, the spatial resolution $\Delta x$ may be designed to be changed according to the distance d to the object.

EXAMPLE 3

Description has been made in the embodiment regarding an example in which the distance measurement sensor 100 is mounted on a lamp as an example application of the distance measurement sensor 100. However, the usage of the distance measurement sensor 100 is not restricted to such an example. Rather, the distance measurement sensor 100 is applicable to various kinds of usages that do not require the level of performance of high-cost commercially available LiDAR.

Description has been made regarding the present invention with reference to the embodiments using specific terms. However, the above-described embodiments show only an aspect of the mechanisms and applications of the present invention. Rather, various modifications and various changes in the layout can be made without departing from the scope of the present invention defined in appended claims.

[INDUSTRIAL APPLICABILITY]

The present invention relates to a distance measurement technique.

[DESCRIPTION OF THE REFERENCE NUMERALS]

100 distance measurement sensor, 110 light source, 120 scanning device, 122 motor, 124 rotational shaft, 126 mirror, 130 photosensor, 140 processor, 200 automotive lamp, 202 light source, 204 lighting circuit, 206 optical system, 300 automobile, 302 headlamp, 310 lamp system, 304 in-vehicle ECU, 400 object detection system, 410 processing device.

**Claims**

1. A distance measurement sensor (100) comprising:

   a light source (110);
   a scanning device (120) comprising a motor (122) and a mirror (126) attached to the motor (122) and structured to reflect emitted light of the light source (110), wherein the scanning device (120) is structured such that scan probe light, which is light reflected by the mirror, can be scanned according to a rotation of the motor;
   a photosensor (130) structured to detect during a scan period return light (L3), which is the probe light reflected from a point (P) on an object (OBJ); and
   a processor (140) structured to detect a distance to the point (P) on the object (OBJ) based on an output of the photosensor (130),
   **characterized in that** an angular resolution in a scan direction is dynamically changed according to the distance to the point (P) on the object (OBJ) during the scan period.

2. The distance measurement sensor (100) according to claim 1, wherein a rotational speed of the motor (122) is changed according to the distance to the object (OBJ).

3. The distance measurement sensor (100) according to claim 1 or 2, wherein a distance measurement period is changed according to the distance to the object (OBJ).

4. The distance measurement sensor (100) according to any one of claims 1 through 3, wherein the angular resolution is changed in a discrete manner according to the distance to the object (OBJ).

5. An automotive lamp (200) comprising:

   the distance measurement sensor (100) according to any one of claims 1 through 4;
   a variable light distribution lamp (202,204,206); and
   a controller (208) structured to control the variable light distribution lamp (202,204,206) according to an output of the distance measurement sensor (100).

6. A distance measurement method comprising:

   rotating a motor (122) to which a mirror (126) is attached;
   irradiating light to the mirror (126) so as to scan light reflected from the mirror (126);
   detecting during a scan period, by means of a photosensor (130), return light (L3) which is light reflected from an object (OBJ);
   detecting, by calculation, a distance to a point (P) on the object (OBJ) based on an output of the photosensor (130); **characterized in** the method further comprising
   changing an angular resolution in a scan direction dynamically according tc the distance to the point (P) on the object (OBJ) during the scan period.

**Patentansprüche**

1. Abstandsmessungssensor (100), der Folgendes umfasst:

   eine Lichtquelle (110);
   eine Abtastvorrichtung (120), die einen Motor (122) und einen Spiegel (126) umfasst, der an dem Motor (122) angebracht und dazu strukturiert ist, emittiertes Licht der Lichtquelle (110) zu reflektieren, wobei die Abtastvorrichtung (120) so strukturiert ist, dass Abtastsondenlicht, das von dem Spiegel reflektiertes Licht ist, gemäß einer Drehung des Motors abgetastet werden kann;
   einen Fotosensor (130), der dazu strukturiert ist, während einer Abtastperiode Rücklicht (L3) zu detektieren, das das Sondenlicht ist, das von einem Punkt (P) auf einem Objekt (OBJ) reflektiert wird; und
   einen Prozessor (140), der dazu strukturiert ist, basierend auf einer Ausgabe des Fotosensors (130) einen Abstand zu dem Punkt (P) auf dem Objekt (OBJ) zu detektieren,
   **dadurch gekennzeichnet, dass** eine Winkelauflösung in einer Abtastrichtung während der Abtastperiode dynamisch gemäß dem Abstand zu dem Punkt (P) auf dem Objekt (OBJ) geändert wird.

2. Abstandsmessungssensor (100) nach Anspruch 1, wobei eine Drehzahl des Motors (122) gemäß dem Abstand zum Objekt (OBJ) geändert wird.

3. Abstandsmessungssensor (100) nach Anspruch 1 oder 2, wobei eine Abstandsmessungsperiode gemäß dem Abstand zum Objekt (OBJ) geändert wird.

4. Abstandsmessungssensor (100) nach einem der Ansprüche 1 bis 3, wobei die Winkelauflösung auf eine diskrete Weise gemäß dem Abstand zum Objekt (OBJ) geändert wird.

5. Kraftfahrzeugleuchte (200), die umfasst:

den Abstandsmessungssensor (100) nach einem der Ansprüche 1 bis 4;
eine variable Lichtverteilungsleuchte (202,204,206); und
eine Steuerung (208), die dazu strukturiert ist, die variable Lichtverteilungsleuchte (202,204,206) gemäß einer Ausgabe des Abstandsmessungssensors (100) zu steuern.

6. Abstandsmessverfahren, das Folgendes umfasst:

Drehen eines Motors (122), an dem ein Spiegel (126) befestigt ist;
Strahlen von Licht auf den Spiegel (126), um von dem Spiegel (126) reflektiertes Licht abzutasten;
Detektieren von Rücklicht (L3), das von einem Objekt (OBJ) reflektiertes Licht ist, während einer Abtastperiode mittels eines Fotosensors (130);
Detektieren, durch Berechnung, eines Abstands zu einem Punkt (P) auf dem Objekt (OBJ) basierend auf einer Ausgabe des Fotosensors (130); **dadurch gekennzeichnet, dass** das Verfahren ferner Folgendes umfasst dynamisches Ändern einer Winkelauflösung in einer Abtastrichtung gemäß dem Abstand zum Punkt (P) auf dem Objekt (OBJ) während der Abtastperiode.

**Revendications**

1. Capteur de mesure de distance (100) comprenant :

une source de lumière (110) ;
un dispositif de balayage (120) comprenant un moteur (122) et un miroir (126) fixé au moteur (122) et structuré pour réfléchir la lumière émise de la source de lumière (110), où le dispositif de balayage (120) est structuré de sorte qu'une lumière de sonde de balayage, qui est la lumière réfléchie par le miroir, puisse être balayée selon une rotation du moteur ;

un photocapteur (130) structuré pour détecter, pendant une période de balayage, une lumière de retour (L3), qui est la lumière de sonde réfléchie à partir d'un point (P) sur un objet (OBJ) ; et
un processeur (140) structuré pour détecter une distance au point (P) sur l'objet (OBJ) sur la base d'une sortie du photocapteur (130),
**caractérisé en ce qu'**une résolution angulaire dans une direction de balayage est modifiée dynamiquement en fonction de la distance au point (P) sur l'objet (OBJ) pendant la période de balayage.

2. Capteur de mesure de distance (100) selon la revendication 1, dans lequel une vitesse de rotation du moteur (122) est modifiée en fonction de la distance à l'objet (OBJ).

3. Capteur de mesure de distance (100) selon la revendication 1 ou 2, dans lequel une période de mesure de distance est modifiée en fonction de la distance à l'objet (OBJ).

4. Capteur de mesure de distance (100) selon l'une quelconque des revendications 1 à 3, dans lequel la résolution angulaire est modifiée de manière discrète en fonction de la distance à l'objet (OBJ).

5. Lampe automobile (200) comprenant :

le capteur de mesure de distance (100) selon l'une quelconque des revendications 1 à 4 ;
une lampe à distribution de lumière variable (202, 204, 206) ; et
un dispositif de commande (208) structuré pour commander la lampe à distribution de lumière variable (202, 204, 206) en fonction d'une sortie du capteur de mesure de distance (100).

6. Procédé de mesure de distance comprenant :

la rotation d'un moteur (122) auquel est fixé un miroir (126) ;
l'irradiation de lumière sur le miroir (126) de manière à balayer la lumière réfléchie par le miroir (126) ;
la détection, pendant une période de balayage, au moyen d'un photocapteur (130), d'une lumière de retour (L3) qui est la lumière réfléchie à partir d'un objet (OBJ) ;
la détection, par calcul, d'une distance à un point (P) sur l'objet (OBJ) sur la base d'une sortie du photocapteur (130) ;
**caractérisé en ce que** le procédé comprend en outre
la modification dynamique d'une résolution angulaire dans une direction de balayage en fonction de la distance au point (P) sur l'objet (OBJ)
pendant la période de balayage.

FIG. 1

100

120

126_1    122

$\theta$MAX    L2

L2

OBJ

P    L1    124

110    130

$\theta$MIN    126_2

L3

PROCESSOR    140

EP 3 889 639 B1

FIG. 2

EP 3 889 639 B1

FIG. 3

OBJ1

OBJ2

P

P

$\Delta\theta$

$\Delta\theta'$

100

FIG. 4A

FIG. 4B

FIG. 5

FIG. 6

EP 3 889 639 B1

FIG. 7

FIG. 8

FIG. 9

FIG. 10

302R

300

100

302L

FIG. 11

310

206

202  204

208

LAMP ECU

304

IN-VEHICLE
ECU

LiDAR

100    410

400

200

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017056935 A
- JP 2009098023 A
- US 2013301030 A1
- EP 2746809 A1
- US 2018052225 A1
- JP H10151987 A